Europäisches Patentamt

European Patent Office

Office européen des brevets

(19)

(11) Veröffentlichungsnummer: **0 395 953**
**A1**

(12) **EUROPÄISCHE PATENTANMELDUNG**

(21) Anmeldenummer: **90107516.8**

(22) Anmeldetag: **20.04.90**

(51) Int. Cl.5: **C02F 1/76, C02F 1/28**

(30) Priorität: **26.04.89 DE 3913710**

(43) Veröffentlichungstag der Anmeldung:
**07.11.90 Patentblatt 90/45**

(84) Benannte Vertragsstaaten:
**AT BE DE FR NL**

(71) Anmelder: **RHEINBRAUN Aktiengesellschaft**
**Stüttgenweg 2**
**D-5000 Köln 41(DE)**

(72) Erfinder: **Schmidt, Karin, Dr.-Dipl.-Chem.**
**Hohenstein 21a**
**D-5600 Wuppertal 2(DE)**
Erfinder: **Lenz, Uwe, Dr.-Dipl.-Chem.**
**Heideweg 7**
**D-5020 Frechen(DE)**

(74) Vertreter: **Koepsell, Helmut, Dipl.-Ing.**
**Mittelstrasse 7**
**D-5000 Köln 1(DE)**

(54) **Verfahren zur Entfernung von Hypohalogenit oder unterhalogeniger Säure aus wässrigen Lösungen.**

(57) Das erfindungsgemäße Verfahren betrifft die Entfernung von aktivem Halogen, d.h. Halogen im Gleichgewicht mit unterhalogeniger Säure aus wässriger Lösung bzw. von Hypohalogenit aus neutraler oder alkalischer wässriger Lösung durch Behandeln der wässrigen Lösungen mit Braunkohlenkoks oder Aktivkohle auf Braunkohlebasis.

EP 0 395 953 A1

## Verfahren zur Entfernung von Hypohalogenit oder unterhalogeniger Säure aus wässrigen Lösungen

Das erfindungsgemäße Verfahren betrifft die Entfernung von aktivem Halogen, d.h. Halogen im Gleichgewicht mit unterhalogeniger Säure aus wässriger Lösung bzw. von Hypohalogenit aus neutraler oder alkalischer wässriger Lösung durch Behandeln der wässrigen Lösungen mit Braunkohlenkoks oder Aktivkohle auf Braunkohlebasis.

Die Verwendung von Koksen und Aktivkohlen zur Abwasserreinigung ist seit langem bekannt. So werden beispielsweise Koks und Aktivkohle als Filtermasse zum Abscheiden feinverteilter Feststoffe in Abwasser· eingesetzt.

Kokse und Aktivkohlen eignen sich auch als Adsorbens für gelöste organische Verunreinigungen.

So wird in "Herdofenkoks aus Braunkohle - konventionelle Einsatzgebiete und zukünftige Einsatzmöglichkeiten" in Erdöl, Erdgas, Kohle, 102 S.143/144 (1986) die Verwendung von Braunkohlenkoks für diesen Zweck beschrieben. Braunkohlenkoks eignet sich gemäß dieser Veröffentlichung auch sehr gut als Zusatz zu biologischen Kläranlagen, da sich Kompaktflocken mit der Biomasse bilden mit verbesserten Sedimentationseigenschaften. Ein besonderes Problem der Abwasserreinigung stellt die Entfernung von aktivem Halogen, nämlich Hypohalogeniten dar.

Obgleich durch chemische Prozesse, wie z.B. die Hydrazin-Synthese, die Desinfektion von Wasser durch Zusatz von Chlor, ferner durch hypochlorit-haltige Wasch- und Bleichmittel in großem Umfang Abwässer anfallen, welche aktives Chlor d.h. elementares Chlor im Gleichgewicht mit unterchloriger Säure und Hypochlorite enthalten, ähnliches gilt für die Halogene Brom und Jod, gibt es kaum Verfahren, um solche Verunreinigungen aus Wasser bzw. wässrigen Lösungen zu entfernen.

In Anbetracht der Entwicklung im Abwasserbereich wird es immer dringender, verbesserte Verfahren zu entwickeln, die auf wirtschaftliche Weise und mit hoher Selektivität die gelösten Verunreinigungen, die sowohl für Pflanzen als auch Tier und Mensch schädlich sind, aus Wasser in dem sie enthalten sind, zu entfernen. Es kann sich hierbei sowohl um Industrieabwässer, als auch um Oberflächengewässer schlechthin, wie Fluß-, Teich-, See- und auch Meerwasser sowie insbesondere um Grundwasser handeln. So sind Deponiesickerwässer, wie allgemein bekannt ist, zu einem zunehmenden Risiko für das Grundwasser geworden.

Der Anmelderin ist es nunmehr gelungen ein Verfahren zu entwickeln, mit dem auf überraschende und sehr wirtschaftliche Weise, aktives Halogen, hierunter wird unterhalogenige Säure im Gleichgewicht mit Halogen in wässriger Lösung bzw. bei entsprechendem pH, Hypohalogenit verstanden, aus der wässrigen Lösung entfernt bzw. weitgehend entfernt werden kann, dadurch gekennzeichnet, daß die aktives Halogen enthaltende Lösung mit Braunkohlenkoks und/oder Aktivkohle aus Braunkohle in Kontakt gebracht wird.

Bekanntlich befindet sich Chlor in wässriger Lösung im Gleichgewicht mit Salzsäure und unterchloriger Säure:

$$Cl_2 + H_2O \rightleftharpoons HCl + HOCl$$

Durch Zusatz von Basen, bzw. Einleiten von Chlor in eine basische wässrige Lösung z.B. Natronlauge erhält man die Salze der unterchlorigen Säure, die Hypochlorite:

$$Cl_2 + 2 NaOH \rightarrow NaCl + NaOCl$$

Während die unterchlorige Säure nur in Form wässriger Lösungen, jedoch nicht in wasserfreiem Zustand bekannt ist, sind die Salze isolierbar, so z.B. NaOCl . 6$H_2O$ oder der sogenannte Chlorkalk CaCl(OCl), der ein gemischtes Salz von Salzsäure und unterchloriger Säure ist. Jedoch auch reines Ca(OCl)$_2$ wird technisch hergestellt.

Verdünnte Lösungen der unterchlorigen Säure, also saure Lösungen zersetzen sich im Tageslicht, insbesondere in Gegenwart bestimmter Katalysatoren wie z.B. Kobalt-, Nickel- oder Kupferoxid schnell unter Bildung von Salzsäure und Sauerstoff:

$$2 HOCl(aq) \rightarrow 2 HCl(aq) + O_2$$

Im Dunkeln erfolgt diese Zersetzung nur langsam.

Im alkalischen Milieu zerfallen die unterchlorige Säure bzw. die Hypochlorite praktisch ausschließlich in Chlorid und Chlorat:

$$3 NaOCl \rightarrow 2 NaCl + NaClO_3$$

Erfindungsgemäß wurde überraschend gefunden, daß in Gegenwart von Braunkohlenkoksen bzw. Aktivkohle auf Braunkohlebasis letztere Reaktion nicht stattfindet, sondern praktisch alleiniger Zerfall in Chloride und Sauerstoff:

$$2 NaOCl \rightarrow 2 NaCl + O_2$$

oder

$$Ca (OCl)_2 \rightarrow CaCl_2 + O_2$$

Gleiches gilt für andere Hypochlorite.

Analog zerfallen auch saure Lösungen, also wässrige Lösungen der unterchlorigen Säure auch im Dunkeln in der Koks- bzw. Aktivkohleschicht schnell nach der Gleichung

$$2\ HOCl \rightarrow 2\ HCl + O_2$$

Erfindungsgemäß lassen sich daher zahlreiche technische sowie Haushalts- oder Gewerbe-Abwasser auf einfache, unvorhergesehene Weise reinigen, wobei nur Sauerstoff und umweltfreundliche Chloride entstehen.

Analoges gilt für unterbromige Säure und Hypobromite sowie unterjodige Säure und Hypojodite, die bekanntlich noch leichter nach folgenden Gleichungen disproportionieren:

$$3\ NaOBr \rightarrow 2\ NaBr + NaBrO_3$$
$$3\ HOBr \rightarrow 2\ HBr + HBrO_3$$
$$3\ NaOJ \rightarrow 2\ NaJ + NaJO_3$$
$$3\ HOJ \rightarrow 2\ HJ + HJO_3$$

Braunkohlen entstammen bekanntlich überwiegend dem Tertiär und sind demgemäß vergleichsweise geologisch junge Kohlen mit niedrigem Inkohlungsgrad. Sie sind reich an bituminösen Stoffen wie Huminsäuren, die sich in Alkalilauge mit tiefbrauner Farbe lösen.

Sie können bis zu 65 Gew.-% Wasser enthalten und werden gewöhnlich im Tagebau auf sehr wirtschaftliche Weise mit Schaufelbaggern abgebaut. Aus Braunkohle kann man auf verschiedene Weise Koks herstellen.

Beispiele sind der durch Schwelen bei ca. 600 °C gewinnbare sog. Grudekoks; durch Verkoken bei 1000 - 1200 °C erhält man den sog. Braunkohlen-Hochtemperaturkoks mit einer spezifischen Oberfläche von etwa 75 - 250 m²/g.

Ein weiterer durch seine Härte und Druckfestigkeit sehr wertvoller Braunkohlenkoks ist der sog. Herdofenkoks im allgemeinen mit einer spezifischen Oberfläche von 250-350 m²/g.

Bei der Verkokung im Herdofen wird feingemahlene und vorgetrocknete Braunkohle über Fallrohre am Außenrand der Herdofenplatte aufgegeben und wandert unter deren ständiger Drehung und der Einwirkung der feststehenden Rührschaufeln langsam zur Mitte, von wo aus der fertige Koks ausgetragen wird. Beim Durchgang treten die flüchtigen Bestandteile aus der Braunkohlen-/Koksschüttung aus und werden unter Luftzufuhr von außen oberhalb der Koksschüttung teilweise verbrannt. Der Verkokungs prozeß wird über diese Verbrennung eines Teiles der flüchtigen Bestandteile geführt, das heißt, es wird unter Luftmangel gearbeitet, so daß jeweils nur eine solche Menge an flüchtigen Bestandteilen verbrennt, wie zur Aufrechterhaltung der Verkokungstemperatur benötigt wird. Das Verkoken von Braunkohle im Herdofen erfolgt im allgemeinen ohne Zufuhr von Wasserdampf oder Wasser von außen, da der Wassergehalt der vorgetrockneten Braunkohle so eingestellt werden kann, daß Koks mit den gewünschten Eigenschaften erhalten wird. Erfindungsgemäß besonders bewährt hat sich aus rheinischer Braunkohle hergestellter Herdofenkoks. Die genannten Braunkohlenkoksqualitäten sind beispielhaft, jedoch nicht als limitierend anzusehen.

Aktivkohlen oder aufgrund ihrer großen Oberfläche auch Adsorptionskohlen genannt, werden häufig aus Holz gewonnen, jedoch auch Braunkohle ist ein geeignetes Ausgangsmaterial.

Es gibt zahlreiche Verfahren zur Herstellung von Aktivkohlen. Beispielhaft seien Schwelverfahren mit anschließender Behandlung mit Wasserdampf, Erhitzen von fein verteilten Einsatzmaterialien in Gegenwart von oxidierenden Gasen in der Wirbelschicht, Behandeln von verkohlter Substanz mit auf ca. 1000 °C überhitztem Wasserdampf u.a. genannt, Aktivkohlen, die nach diesem oder anderen Verfahren aus Braunkohle hergestellt sind und auch ggfs. auf dem Markt erhältlich sind, eignen sich für das erfindungsgemäße Verfahren.

Vor der Behandlung der die Verunreinigungen enthaltenden Flüssigkeit mit dem aus Braunkohle hergestellten Koks und/oder der Aktivkohle werden Koks bzw. Aktivkohle vorteilhafterweise entgast, d.h. das an der Oberfläche bzw. in den Poren haftende Gas, im allgemeinen Luft, wird zumindest teilweise jedoch bevorzugt möglichst vollständig entfernt. Dies geschieht in einer bevorzugten Ausführungsform durch Evakuieren. Das Evakuieren kann auf die Weise erfolgen, daß an den den Koks und/oder die Aktivkohle enthaltenden Behälter Vakuum angelegt wird und daß man anschließend die Flüssigkeit, vorzugsweise Wasser in den Koks bzw. die Aktivkohle strömen läßt. Man kann jedoch auch zunächst den Koks und/oder die Aktivkohle mit der Flüssigkeit benetzen bzw. bedecken und anschließend Vakuum anlegen. Das Entfernen des an dem Koks bzw. der Aktivkohle haftenden Gases ist eine wichtige bevorzugte Ausführungsform der vorliegenden Erfindung, wie aus den durchgeführten Versuchen hervorgeht, obgleich auch nicht entgaster Koks gute Ergebnisse ergibt. Sehr vorteilhaft kann die Entgasung durch Behandeln mit Dampf oder heißem Wasser oder beidem sein, auch in Kombination mit einer Entgasung durch Evakuieren. Ebenso kann die Entgasung und Mischung mit Wasser in der Weise erfolgen, daß fein verteilter Koks oder Aktivkohle in den Wasserstrahl einer Wasserstrahlpumpe eingesaugt werden. Ein weiteres Entgasungsver-

3

fahren ist die Kreislauffahrweise mit Wasser. Hierbei kann auch das zu reinigende Abwasser eingesetzt werden. Hierbei sollte der pH-Wert des Kreislaufwassers auf Werte > 10, bevorzugt > 12 während der vorteilhafterweise mehrstündigen Kreislauffahrweise ansteigen.

Ein besonderer Vorteil von Braunkohlekoks ist die Verfügbarkeit desselben und die hohe Wirtschaftlichkeit. Dies gilt insbesondere für Herdofenkoks, der um wenigstens einen Faktor 10 preisgünstiger ist als Aktivkohle.

Das Verfahren ist auf sehr einfache Weise kontinuierlich durchführbar, indem man das zu reinigende Wasser, welches auch sonstige Verunreinigungen wie z.B. lösliche organische oder Metallsalz-Verunreinigungen enthalten kann, mit dem Koks und/oder der Aktivkohle in der Weise in Kontakt bringt, daß man Koks bzw. Aktivkohle als festes Bett anordnet und das Wasser über dieses mit einer bestimmten Verweilzeit fließen läßt. Hierbei kann das Wasser von unten nach oben durch das Bett gedrückt werden oder von oben nach unten durch dasselbe fließen. Auch ein wanderndes Festbett, ein Wirbelbett und andere Formen des Kontaktes zwischen Flüssigkeit und Adsorptionsmitteln sind möglich, wie beispielsweise im Suspensionsbett.

Der den Koks oder die Aktivkohle enthaltende Behälter kann auch mit der zu reinigenden wässrigen Lösung ganz oder teilweise aufgefüllt werden und für eine bestimmte Zeit stehen. Anschließend kann das gereinigte Wasser aus dem Behälter entnommen werden. Auch dieses diskontinuierliche erfindungsgemäße Verfahren kann in bestimmten Fällen von Vorteil sein, beispielsweise, wenn es sich um kleinere zu reinigende Wassermengen handelt.

Bei der Reinigung des Wassers wird bevorzugt bei einem pH von > 7 und besonders bevorzugt bei einem pH von > 8 in der zu reinigenden Flüssigkeit, insbesondere in Wasser gearbeitet. Der pH kann jedoch auch niedriger oder höher sein. Der pH in der gereinigten Flüssigkeit wird jedoch nicht während der ganzen Reinigungsperiode auf diesen Werten gehalten, sondern derselbe kann während des Reinigungsbetriebs auf höhere Werte wie beispielsweise auf 8, oder höher ansteigen, aber auch auf niedrigere Werte z.B. 7 absinken.

Grundsätzlich können Koks oder Aktivkohle erfindungsgemäß mit sehr unterschiedlichen Korngrößen eingesetzt werden, wie z.B. von > 0 bis 100 mm oder größer. Aus technischen und wirtschaftlichen Gründen sind jedoch bestimmte Korngrößen bevorzugt, nämlich > 0,01 bis 20 mm und besonders bevorzugt von > 0,01 - 10 mm. Übliche Feinkokssorten liegen z.B. etwa zwischen 1,2 - 5 mm, Feinstkokssorten zwischen 0,1 - 1,5 mm. Alle diese Korngrößen, auch Koksstäube mit einer Korngröße < 0,4 mm sind einsetzbar und liefern sehr gute Ergebnisse. Es ist zu berücksichtigen, daß die Korngrößen in zerkleinerten und gesiebten Produkten einer Gaus'schen Verteilung unterliegen, d.h. eine mittlere Korngröße in den angegebenen Grenzen überwiegt, jedoch in kleinen Mengen liegen auch kleinere und größere Körnungen vor.

Im praktischen Einsatz kann es von Vorteil sein, im unteren Bett grobe Körnungen zu verwenden bis zu 100 mm, jedoch im oberen Teil kleine Korngrößen. Auch die umgekehrte Anordnung kann ggfs. von Wichtigkeit sein, daß ein Teil der Verunreinigungen im oberen groben Teil abgefangen wird und die restlichen Verunreinigungen im feinkörnigen unteren Teil.

Die Verweilzeit der die unterchlorige Säure bzw. die Hypochlorite enthaltenden wässrigen Flüssigkeit in der Koksschicht kann erfindungsgemäß 1 min. bis 10 Stunden betragen, bevorzugt 3 min. bis 3 Stunden und besonders bevorzugt 5 min. bis 2 Stunden.

Von den Braunkohlekoksen ist der Herdofenkoks erfindungsgemäß bevorzugt. Dieser ist sehr preiswert verglichen mit anderen Koksarten und mit Aktivkohle und zeigt hervorragende Adsorptionseigenschaften für die genannten chlorhaltigen Verunreinigungen.

Herdofenkoks wird im allgemeinen als sog. Feinkoks mit einer Korngröße von 1,25 - 5 mm, als Feinstkoks mit einer Korngröße von 0,1 - 1,5 mm und als Koksstaub mit einer Korngröße von < 0,4 mm gehandelt.

Sämtliche Korngrößen können erfindungsgemäß wie bereits dargelegt, einzeln oder als Gemische eingesetzt werden, wobei jedoch bei Einsatz von Koksstaub allein ebenfalls vorzugsweise mit dem Wasser eine innige Vermischung durch beispielsweise Rühren erfolgen sollte.

Zur weiteren Erläuterung der vorliegenden Erfindung dienen folgende Versuche:

(In allen gereinigten Wasserproben kann der Restgehalt an Hypochlorit durch photometrische Bestimmung des freien Chlors (Farbreaktion mit Diethyl-p-phenylendiamin) aber auch andere Methoden bestimmt werden. Als Herdofenkoks wurde ein Produkt aus Rheinischer Braunkohle eingesetzt).

Für die technische Durchführung des erfindungsgemäßen Verfahrens eignet sich beispielhaft das in der deutschen Patentanmeldung Nr. P 38 23 127.1 von der gleichen Anmelderin angemeldete Verfahren. Kennzeichnendes Merkmal der vorliegenden Erfindung ist jedoch nicht die apparative Durchführung, sondern der Einsatz von Koksen und Aktivkohle auf Braunkohlebasis, für die Entfernung der genannten chlorhaltigen Verunreinigungen.

Beispiele

Soweit nicht anders angegeben, wurden über eine Menge von 60 cm³ Herdofenkoks der sich in einem Glasrohr mit Fritte am Auslauf befand, (Höhe der Kokssäule: 22 cm) pro Stunde 60 cm³ einer wässrigen Lösung von 400 mg OCl⁻ und 6410 mg Cl⁻ pro L Wasser als Alkali- oder Erdalkalisalze geleitet. Es wurde bei Raumtemperatur und Normaldruck gearbeitet. Die Einsatzlösung hatte einen pH von 12.

Tabelle 1

| Versuchs-Nr. | Koksart | Korngröße mm | Verweilzeit/min. | Versuchsdauer/h | Konzentration an Hypochlorit als aktives Chlor nach Reinigung/mg/L |
|---|---|---|---|---|---|
| | Abhängigkeit der Abwasserreinigung von der verwendeten Koks- bzw. Aktivkohleart (400 mg $OCl^-$ + 6410 mg $Cl^-$ pro L Wasser, pH 12) |
| 1 | Herdofenkoks (Braunkohlebasis) spez. Oberfläche 250 - 350 $m^2$/g | 0,2 - 5 | 60 | 100 | < 0,1 |
| 2 | Steinkohlenkoks spez. Oberfläche 5 - 25 $m^2$/g | 0,2 - 5 | 60 | 20 | 116 |
| 3 | Aktivkohle (aus Holz) spez. Oberfläche 1200 - 1800 $m^2$/g | 0,2 - 5 | 60 | 100 | 11 |
| 4 | Aktivkohle/Hydraffin (aus Braunkohle/Fa.Lurgi) spez. Oberfläche 600 - 1200 $m^2$/g | 0,2 - 5 | 60 | 100 | 0,3 |
| 5 | Hochtemperatur-Braunkohlenkoks, spez. Oberfläche 130 - 250 $m^2$/g | 0,2 - 5 | 60 | 100 | 0,9 |
| 6 | Tieftemperatur-Braunkohlenkoks (DDR),spez.Oberfläche 20 - 120 $m^2$/g | 0,2 - 5 | 60 | 100 | 0,3 |
| 7 | Australischer Braunkohlenkoks | 0,2 - 5 | 60 | 40 | 4,3 |

EP 0 395 953 A1

Tabelle 2

| Einfluß der Korngröße bei Einsatz von Herdofenkoks aus Braunkohle bei gleicher $OCl^-$ und $Cl^-$-Konzentration wie in Tabelle 1. | | | | | | |
|---|---|---|---|---|---|---|
| Versuchs-Nr. | Koksvolumen ml | Korngröße mm | Verweilzeit min. | pH | Versuchsdauer/h | Konzentration an Hypochlorit als aktives Chlor nach Reinigung mg/L |
| 8 | 60 | 0,1 - 1,5 | 60 | 12 | 100 | < 0,1 |
| 9 | 60 | 1,25 - 5 | 60 | 12 | 100 | < 0,1 |
| 10 | 60 | 1,25-5 (60Gew.%) < 0,4 (40Gew.%) | 60 | 12 | 100 | < 0,1 |

EP 0 395 953 A1

# EP 0 395 953 A1

Tabelle 3

| Einfluß des eingesetzten Hypohalogenits bei Einsatz von Herdofenkoks aus Braunkohle (10 mmol Hypochlorit/L, 0,1 mol Chlorid). | | | | | | | |
|---|---|---|---|---|---|---|---|
| Vers.-Nr. | Hypohalogenit | Koksvolumen ml | Korngröße mm | Verweilzeit min. | pH | Vers.-dauer/h | Konzentration an Halogenit nach Reinigung mg/L |
| 11 | NaOCl | 60 | 0,2 - 5 | 60 | 12 | 100 | < 0,1 |
| 12 | $Ca(OCl)_2$ | 60 | 0,2 - 5 | 60 | 12 | 100 | < 0,1 |
| 13 | CaCl(OCl) | 60 | 0,2 - 5 | 60 | 12 | 100 | < 0,1 |
| 14 | KOCl | 60 | 0,2 - 5 | 60 | 12 | 100 | < 0,1 |
| 15 | NaOBr | 60 | 0,2 - 5 | 60 | 12 | 100 | < 0,1 |
| 16 | NaOJ | 60 | 0,2 - 5 | 60 | 12 | 100 | < 0,15 |

8

Tabelle 4

| Einfluß der Vorbehandlung auf Herdofenkoks (Entgasung) (pH 12, 400 mg OCl⁻ und 6410 mg Cl⁻/L Abwasser, Koksmenge 60 ml, Verweilzeit 60 min., Korngröße 1,25 - 5 mm, Versuchsdauer 100 Stunden). | | |
|---|---|---|
| Versuchs-Nr. | Vorbehandlung | Konzentration an Hypochlorit als aktives Chlor nach Reinigung mg/L |
| 17 | Evakuieren, anschließend Wasserzugabe | < 0,1 |
| 18 | Evakuieren unter Wasser | < 0,1 |
| 19 | Dämpfen mit Dampf (3,5 bar) | < 0,1 |
| 20 | Behandlung mit kochendem Wasser | < 0,1 |
| 21 | Einsaugen und Mischen mit Wasser mittels Wasserstrahlpumpe | < 0,1 |
| 22 | Kreislauffahrweise | < 0,1 |
| 23 | ohne Vorbehandlung | 0,2 |

Tabelle 5

| Einfluß der Verweilzeit. | | |
|---|---|---|
| Sonstige Bedingungen wie in Tabelle 4. | | |
| Versuchs-Nr. | Verweilzeit min. | Konzentration an Hypochlorit als aktives Chlor nach Reinigung mg/L |
| 24 | 10 | 0,2 |
| 25 | 30 | < 0,1 |
| 26 | 60 | < 0,1 |
| 27 | 180 | < 0,1 |

Tabelle 6

| Einfluß der Hypochloritkonzentration. | | |
|---|---|---|
| Sonstige Bedingungen wie in Tabelle 4. | | |
| Versuchs-Nr. | Konzentration mg OCl/L | Konzentration an Hypochlorit als aktives Chlor nach Reinigung mg/L |
| 28 | 400 | < 0,1 |
| 29 | 800 | < 0,1 |
| 30 | 1200 | 0,2 |

Tabelle 7

| Einfluß des pH. | | |
|---|---|---|
| Sonstige Bedingungen wie in Tabelle 4. | | |
| Versuchs-Nr. | pH | Konzentration an Hypochlorit als aktives Chlor nach Reinigung mg/L |
| 31 | 8 | < 0,1 |
| 32 | 10 | < 0,1 |
| 33 | 12 | < 0,1 |
| 34 | 14 | < 0,1 |
| 35 | freie HOCl | 0,3 |

Tabelle 8

| Einfluß der Versuchsdauer. | | |
|---|---|---|
| Sonstige Bedingungen wie in Tabelle 4. | | |
| Versuchs-Nr. | Versuchsdauer h | Konzentration an Hypohalogenit als aktives Chlor nach Reinigung |
| 36 | 2 | < 0,1 |
| 37 | 24 | < 0,1 |
| 38 | 120 | < 0,1 |
| 39 | 240 | < 0,1 |

Die in Tabelle 1 zusammengefaßten Ergebnisse zeigen, daß mit Herdofenkoks aus Braunkohle, (es handelt sich bei den Versuchen um Rheinische Braunkohle) erstaunlich gute Ergebnisse erhalten werden, nämlich bei den angegebenen Bedingungen ein Restgehalt von $OCl^-$ (gemessen als freies Chlor) < 0,1 mg/L.

Auch nach einhundert Stunden liegt der Restgehalt bei diesem Wert.

Auch mit der käuflichen Aktivkohle Hydraffin (Versuch 4) ist das Ergebnis sehr gut, ebenso mit Tieftemperaturkoks (Versuch 6). Ein schlechtes Ergebnis liefert dagegen Steinkohlenkoks (Versuch 2).

Tabelle 2 zeigt, daß bei Einsatz von Herdofenkoks die Korngröße in weiten Grenzen variiert werden kann, ohne daß ein schlechteres Ergebnis erhalten wird.

Unabhängig vom eingesetzten Hypohalogenit werden gemäß Tabelle 3, bis auf Versuch 16, gleich gute Ergebnisse erhalten.

Auch die Vorbehandlung des eingesetzten Kokses ist ohne Einfluß auf die Ergebnisse. Etwas schlechter ist dies jedoch bei nicht vorbehandeltem Koks (Tabelle 4).

Tabelle 5 und 6 zeigen, daß auch bei der relativ kurzen Verweilzeit von 10 Minuten und ebenfalls bei relativ hohen Konzentrationen an Hypohalogenit, sehr gute Ergebnisse erhalten werden.

Gemäß Tabelle 7 läßt sich der pH in weiten Grenzen variieren, ohne daß die Wirksamkeit des erfindungsgemäßen Verfahrens beeinträchtigt wird.

Schließlich geht aus Tabelle 8 hervor, daß auch bei sehr langer Versuchsdauer der Hypochloritabbau unvermindert stattfindet.

Die Versuche zeigen, daß durch das erfindungsgemäße Verfahren ein Weg aufgezeigt wird, durch den die in zahlreichen Verfahren anfallenden Hypohalogenitlaugen praktisch vollständig aufgearbeitet werden können zu umweltfreundlichen Halogenidlösungen.

Von besonderer Bedeutung ist hier die hervorragende Eignung des preiswerten Herdofenkokses auf Braunkohlenbasis, so daß nunmehr ein Verfahren zur Verfügung steht, die Hypohalogenit-Aufarbeitung auch auf besonders wirtschaftliche Weise durchzuführen.

## Ansprüche

1. Verfahren zur Entfernung von Hypohalogenit oder unterhalogeniger Säure aus wässrigen Lösungen, die ggfs. weitere Verunreinigungen enthalten können, dadurch gekennzeichnet, daß die Hypohalogenit oder unterhalogenige Säure enthaltende Lösung mit Braunkohlenkoks und/oder Aktivkohle aus Braunkohle in Kontakt gebracht wird.

2. Verfahren nach Anspruch 1, dadurch gekennzeichnet, daß bei einem pH ≧ 7 gearbeitet wird.

3. Verfahren nach den Ansprüchen 1 und 2, dadurch gekennzeichnet, daß Braunkohlekoks eingesetzt wird.

4. Verfahren nach den Ansprüchen 1 - 3, dadurch gekennzeichnet, daß Herdofenkoks aus Braunkohle eingesetzt wird.

5. Verfahren nach den Ansprüchen 1 - 4, dadurch gekennzeichnet, daß die Verweilzeit der wässrigen Lösung in der Koks- bzw. Aktivkohleschicht 2 bis 600 min., bevorzugt 5 bis 240 min., besonders bevorzugt 5 bis 180 min. beträgt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | ENERGIE, Band 35, Nr. 3, März 1983, Seiten 35-37, Technischer Verlag Resch KG, Gräfelfing, DE; D. BÖCKER et al.: "Edle Körner" * Seite 35; Seite 37, mittlere Spalte, Zeile 15 - rechte Spalte * | 1,3,4 | C 02 F 1/76 C 02 F 1/28 |
| Y | US-A-4 094 779 (BEHRMAN) * Spalte 2, Zeilen 34-50 * | 1,3,4 | |
| A | PATENT ABSTRACTS OF JAPAN, Band 13, Nr. 227, 25. Mai 1989; & JP-A-01 038 191 (ISOMURA HOUSUI KIKO K.K.) 08-02-1989 | 1 | |
| A | DE-A- 107 232 (DEGENER) * Insgesamt * | 1 | |
| A | DE-A- 591 527 (CARBO NORIT UNION) * Beispiel 2 * | 1 | |
| A | AT-A- 296 172 (CULLIGAN SOFT WATER SERVICE) * Seite 2, Zeilen 1-25,42-57 * | 1,5 | **RECHERCHIERTE SACHGEBIETE (Int. Cl.5)** C 02 F |
| A | DE-U-8 334 447 (HENNIG) * Seite 2, Absatz 1 * | 1 | |
| A | GB-A- 872 932 (WACKER-CHEMIE) * Anspruch 1 * | 1 | |

Der vorliegende Recherchenbericht wurde für alle Patentansprüche erstellt

| Recherchenort | Abschlußdatum der Recherche | Prüfer |
|---|---|---|
| DEN HAAG | 12-07-1990 | KASPERS H.M.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)